# FASCICULE DE BREVET EUROPEEN

(11) **EP 3 696 090 B1**
(45) Date de publication et mention de la délivrance du brevet: **19.05.2021**
(21) Numéro de dépôt: 20153296.7
(22) Date de dépôt: 23.01.2020
(51) Int. Cl.: B64D 33/02, F02C 7/045, F02C 7/24, E04B 1/84, F02K 1/34

(54) **PROCÉDÉ DE RÉALISATION D'UNE STRUCTURE D'ABSORPTION ACOUSTIQUE COMPRENANT UNE PEAU FORMANT UNE PLURALITÉ D'ENCEINTES, STRUCTURE D'ABSORPTION ACOUSTIQUE OBTENUE SELON LEDIT PROCÉDÉ ET AÉRONEF COMPRENANT LADITE STRUCTURE D'ABSORPTION ACOUSTIQUE**
HERSTELLUNGSVERFAHREN EINER SCHALLABSORPTIONSSTRUKTUR, DIE EINE HÜLLE UMFASST WELCHE EINE VIELZAHL VON SCHALLWÄNDEN BILDET, NACH DIESEM VERFAHREN HERGESTELLTE SCHALLABSORPTIONSSTRUKTUR UND LUFTFAHRZEUG, DAS DIESE SCHALLABSORPTIONSSTRUKTUR UMFASST
METHOD FOR MANUFACTURING AN ACOUSTIC ABSORPTION STRUCTURE INCLUDING A SKIN FORMING A PLURALITY OF ENCLOSURES, ACOUSTIC ABSORPTION STRUCTURE OBTAINED ACCORDING TO SAID METHOD AND AIRCRAFT COMPRISING SAID ACOUSTIC ABSORPTION STRUCTURE

(30) Priorité: 14.02.2019 FR 1901469
(43) Date de publication de la demande: 19.08.2020
(73) Titulaire: AIRBUS OPERATIONS (S.A.S.), 31060 Toulouse (FR)
(72) Inventeur: RICCOBENE, Théo, 31060 TOULOUSE Cedex 9 (FR); DOBIGEON, Franck, 31060 TOULOUSE Cedex 9 (FR)
(74) Mandataire: Gicquel, Olivier Yves Gérard

(56) Documents cités:
- DE-A1-102011 008 920
- FR-A1- 2 214 932
- FR-A1- 3 026 122
- FR-A1- 3 055 662
- GB-A- 1 470 036
- US-A1- 2015 027 629

## Description

La présente demande se rapporte à un procédé de réalisation d'une structure d'absorption acoustique comprenant une peau formant une pluralité d'enceintes, à une structure d'absorption acoustique obtenue selon ledit procédé ainsi qu'à un aéronef comprenant ladite structure d'absorption acoustique.

Selon un mode de réalisation de l'art antérieur, un ensemble propulsif comprend une nacelle ainsi qu'une turbomachine double flux, positionnée à l'intérieur de la nacelle. Certaines surfaces de la nacelle et de la turbomachine comprennent des structures d'absorption acoustique pour atténuer les nuisances sonores. Selon un mode de réalisation, une structure d'absorption acoustique comprend une couche poreuse, une couche alvéolaire en nid d'abeilles et une couche réflectrice.

Une turbomachine à haut taux de dilution dit UHBR (pour Ultra Hight Bypass Ratio en anglais) présente une soufflante tournant à des fréquences plus basses que certaines turbomachines actuellement sur le marché si bien que les structures d'absorption acoustique doivent être configurées pour atténuer des ondes sonores à basses fréquences. Pour atténuer de telles ondes sonores, la couche alvéolaire en nid d'abeilles doit avoir une hauteur importante ce qui est pénalisant en terme de masse, d'encombrement et de fabrication.

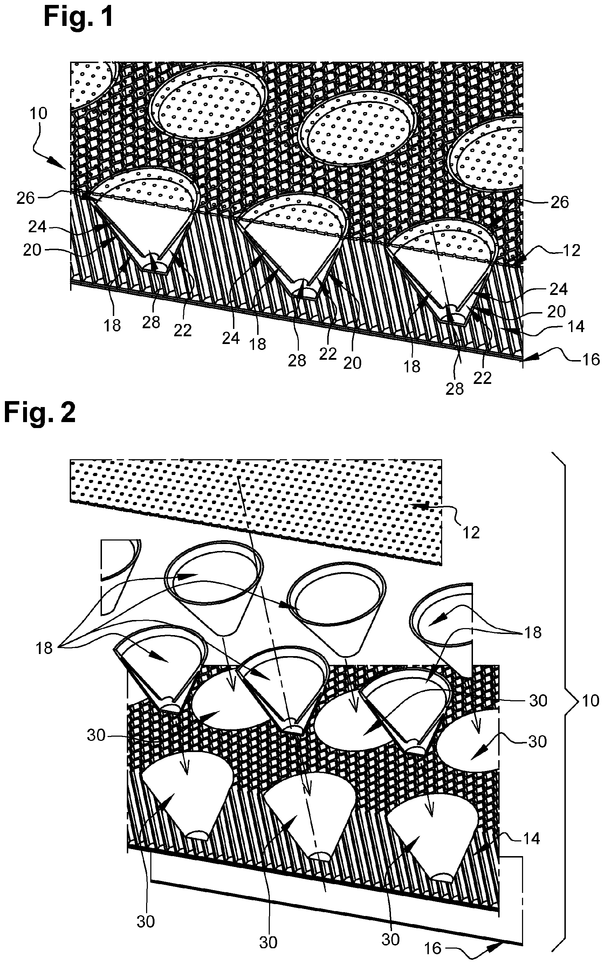

Une structure d'absorption acoustique permettant d'absorber des ondes sonores à basses fréquences est décrite dans le document « aero-acoustic liner applications of the broadband special acoustic absorber concept, American Institute of Aeronautics and Astronautics, AIAA 2013-2176, 19th AIAA/CEAS Aeroacoustics Conférence May 27-29, 2013, Berlin, Germany ». Selon un mode de réalisation visible sur les figures 1 et 2, une structure d'absorption acoustique 10 comprend une couche poreuse 12 en contact avec un milieu dans lequel se propagent des ondes sonores, une structure alvéolaire 14, une couche réflectrice 16 ainsi qu'une pluralité d'éléments acoustiques 18. Chacun d'eux comprend une capsule 20 fermée par la couche poreuse 12 de sorte à délimiter une cavité 22 dans laquelle est positionné un cône 24 creux, distant de la capsule 20, qui présente une ouverture 26 débouchant au niveau de la couche poreuse 12. Chaque cône 24 comprend au moins un orifice acoustique 28, permettant de faire communiquer l'intérieur du cône 24 avec l'espace entre le cône 24 et la capsule 20, positionné et dimensionné en fonction des caractéristiques acoustiques recherchées.

Une structure d'absorption acoustique 10 ainsi formée, basée sur le même principe qu'un résonateur de Helmholtz et qu'un résonateur quart d'onde, permet d'atténuer efficacement les sons basses fréquences émis par une turbomachine de type UHBR.

Selon un autre mode de réalisation, chaque élément acoustique comprend une capsule fermée par la couche poreuse, positionnée dans la structure alvéolaire 14.

Selon un mode opératoire, les éléments acoustiques 18 sont réalisés, indépendamment les uns des autres, par moulage ou par injection, en résine chargée de fibres courtes ou sans fibres, et sont positionnés dans des empreintes 30 usinées dans la structure alvéolaire 14. Les éléments acoustiques 18 sont reliés à la structure alvéolaire 14 par collage ou par encastrement.

Ce mode opératoire n'est pas pleinement satisfaisant car tous les éléments acoustiques 18 doivent être individuellement manipulés et positionnés dans les empreintes 30 de la structure alvéolaire 14. Par ailleurs, la liaison par collage ou par encastrement entre les éléments acoustiques 18 et la structure alvéolaire 14 tend à rigidifier la structure d'absorption acoustique 10 ainsi obtenue qui peut alors difficilement épouser la forme d'un conduit cylindrique d'une nacelle d'aéronef. Enfin, ce mode de réalisation est pénalisant sur le plan de la masse.

L'art antérieur est également illustré par le document GB-A-1 470 036.

La présente invention vise à remédier à tout ou partie des inconvénients de l'art antérieur.

A cet effet, l'invention a pour objet un procédé de réalisation d'une structure d'absorption acoustique comprenant une structure acoustiquement résistive, une structure alvéolaire, une couche réflectrice ainsi qu'une pluralité d'éléments acoustiques comportant chacun une enceinte positionnée dans la structure alvéolaire et présentant une embouchure délimitée par un bord plaqué contre la structure acoustiquement résistive de sorte que l'enceinte et la structure acoustiquement résistive délimitent une cavité.

Selon l'invention, le procédé comprend une étape de formage d'une peau formant les enceintes des éléments acoustiques en rapportant une résine sur un moule présentant une base sur laquelle sont positionnées des formes en saillie conformées comme les cavités des éléments acoustiques, une étape d'accostage du moule supportant la résine et d'une structure alvéolaire, la résine étant intercalée entre le moule et la structure alvéolaire, une étape de polymérisation de la résine afin d'obtenir simultanément un durcissement de la peau et la jonction entre la peau et la structure alvéolaire, et une étape de mise en place de la structure acoustiquement résistive et de la couche réflectrice.

Le procédé de l'invention permet d'obtenir simultanément une multitude d'enceintes avec une épaisseur relativement fine par rapport à celle des enceintes des éléments acoustiques de l'art antérieur obtenues par injection, ce qui contribue à réduire la masse des éléments acoustiques.

Selon une autre caractéristique, le moule est réalisé en un matériau déformable ou flexible.

Selon une première variante, la résine est configurée pour conférer à la peau une rigidité après l'étape de polymérisation, le moule présentant une base conformée comme la structure d'absorption acoustique à réaliser.

Selon une deuxième variante, la résine est configurée pour obtenir une peau souple après l'étape de polymérisation.

Selon un mode de réalisation, la résine est une résine mixte polyuréthane/époxy.

Selon un mode de réalisation, la résine se présente sous la forme d'un film déformé ou thermoformé sur le moule.

Selon un autre mode de réalisation, la résine est à l'état liquide ou pâteux et déposée sur le moule par projection, par enduction ou par trempage.

Selon une autre caractéristique, la résine est positionnée entre le moule et un contre-moule lors de l'étape de polymérisation.

Selon une autre caractéristique, la peau est composée de plusieurs parties réalisées sur des moules indépendants, reliés entre eux par des liaisons flottantes.

L'invention a également pour objet une structure d'absorption acoustique obtenue à partir du procédé précédemment défini, ladite structure d'absorption acoustique comprenant une structure acoustiquement résistive, une structure alvéolaire, une couche réflectrice ainsi qu'une pluralité d'éléments acoustiques comportant chacun une enceinte positionnée dans la structure alvéolaire et présentant une embouchure délimitée par un bord plaqué contre la structure acoustiquement résistive de sorte que l'enceinte et la structure acoustiquement résistive délimitent une cavité. Selon l'invention, la structure d'absorption acoustique comprend au moins une peau présentant plusieurs formes en creux, reliées entre elles par des bandes de matière coplanaires, chaque forme en creux étant conformée comme une enceinte, ladite peau étant intercalée entre la structure alvéolaire et la structure acoustiquement résistive.

L'invention a également pour objet un aéronef comprenant au moins une telle structure d'absorption acoustique.

D'autres caractéristiques et avantages ressortiront de la description de l'invention qui va suivre, description donnée à titre d'exemple uniquement, en regard des dessins annexés parmi lesquels :
[Fig. 1] est une vue en perspective d'une structure d'absorption acoustique qui illustre un mode de réalisation de l'art antérieur,
[Fig. 2] est une vue en perspective de la structure d'absorption acoustique visible sur la figure 1 en cours d'assemblage,
[Fig. 3] est une vue latérale d'un aéronef,
[Fig. 4] est une coupe longitudinale d'une partie d'un conduit d'un ensemble propulsif d'un aéronef,
[Fig. 5] est une coupe d'une partie d'une structure d'absorption acoustique qui illustre un mode de réalisation de l'invention,
[Fig. 6] est une coupe transversale d'un moule conformé pour obtenir une peau formant une pluralité d'enceintes illustrant un mode de réalisation de l'invention,
[Fig. 7] est une vue en perspective d'un moule qui illustre un mode de réalisation de l'invention,
[Fig. 8] est une coupe transversale d'une peau formant une pluralité d'enceintes rapportée sur le moule visible sur la figure 6 qui illustre un mode de réalisation de l'invention,
[Fig. 9] est une coupe transversale de la peau rapportée sur le moule visible sur la figure 8 lors d'une étape d'accostage avec une structure alvéolaire qui illustre un premier mode de réalisation de l'invention,
[Fig. 10] est une coupe transversale d'une peau formant une pluralité d'enceintes rapportée sur un moule lors d'une étape d'accostage avec une structure alvéolaire qui illustre un deuxième mode de réalisation,
[Fig. 11] est une coupe transversale d'une structure alvéolaire équipée d'une peau formant une pluralité d'enceintes qui illustre un mode de réalisation de l'invention,
[Fig. 12] est une vue de dessus d'une structure alvéolaire équipée d'une peau formant une pluralité d'enceintes qui illustre un mode de réalisation de l'invention, et
[Fig. 13] est une coupe transversale de la structure alvéolaire visible sur la figure 12.

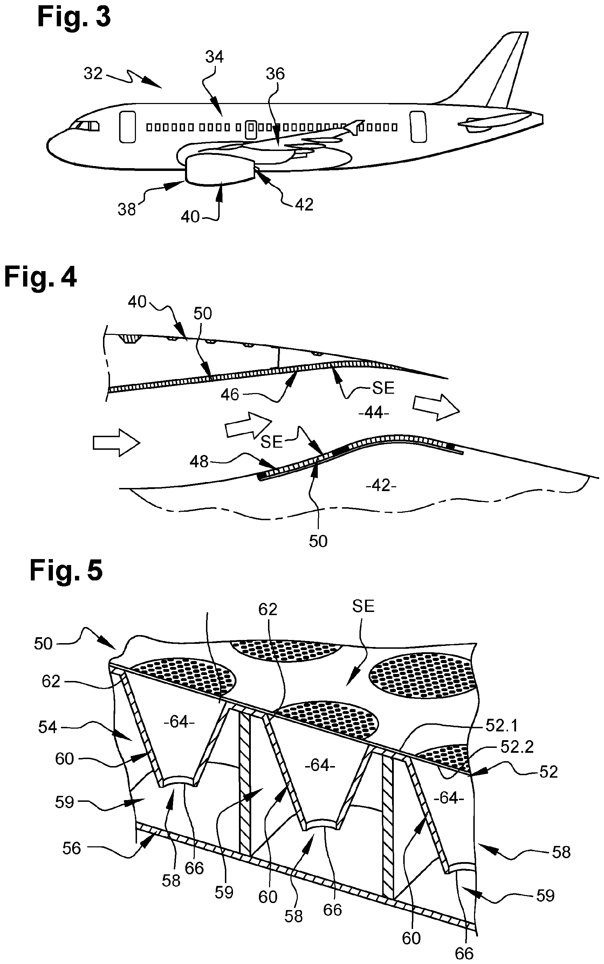

Sur la figure 3, on a représenté un aéronef 32 qui présente un fuselage 34, deux ailes 36, disposées de part et d'autre du fuselage 34, et des ensembles propulsifs 38 fixés sous les ailes 36. Chaque ensemble propulsif 38 comprend une nacelle 40 et une turbomachine 42 positionnée à l'intérieur de la nacelle 40.

Selon un mode de réalisation illustré sur la figure 4, chaque ensemble propulsif 38 comprend un conduit d'éjection 44 délimité par une paroi extérieure 46, solidaire de la nacelle 40, et par une paroi intérieure 48 solidaire de la turbomachine 42.

Selon une configuration, chaque paroi intérieure ou extérieure 46, 48 comprend au moins une structure d'absorption acoustique 50 qui présente une surface extérieure SE en contact avec un milieu dans lequel se propagent des ondes sonores.

Bien que décrite appliquée à un conduit d'éjection 44, l'invention n'est pas limitée à cette application. Ainsi, la structure d'absorption acoustique 50 peut être positionnée au niveau de toute paroi de l'aéronef qui présente une surface extérieure en contact avec un milieu dans lequel se propagent des ondes sonores.

La structure d'absorption acoustique 50 comprend une structure acoustiquement résistive 52, présentant une face externe 52.1, formant la surface extérieure SE de la structure d'absorption acoustique 50, une face interne 52.2 opposée à la face externe 52.1, une structure alvéolaire 54, une couche réflectrice 56, ainsi qu'une pluralité d'éléments acoustiques 58 positionnés dans la structure alvéolaire 54 contre la face interne 52.2 de la structure acoustiquement résistive 52.

Selon un mode de réalisation, la structure alvéolaire 54 est de type à nid d'abeilles comportant une pluralité d'alvéoles 59 traversantes, juxtaposées et présentant une section donnée. Selon un mode de réalisation visible sur la figure 5, la structure acoustiquement résistive 52 comprend au moins une plaque qui est poreuse au moins au droit des éléments acoustiques 58. Bien entendu, l'invention n'est pas limitée à ce mode de réalisation. Ainsi, la structure acoustiquement résistive 52 pourrait être poreuse sur toute sa surface.

Selon un mode de réalisation visible sur la figure 5, chaque élément acoustique 58 comprend une enceinte 60, également appelée capsule, qui présente une embouchure 62 délimitée par un bord plaqué contre la face interne 52.2 de la structure acoustiquement résistive 52 de sorte que l'enceinte 60 et la structure acoustiquement résistive 52 délimitent une cavité 64 ; un orifice acoustique 66 traversant l'enceinte 60 pour faire communiquer la cavité 64 avec une alvéole 59 de la structure alvéolaire 54.

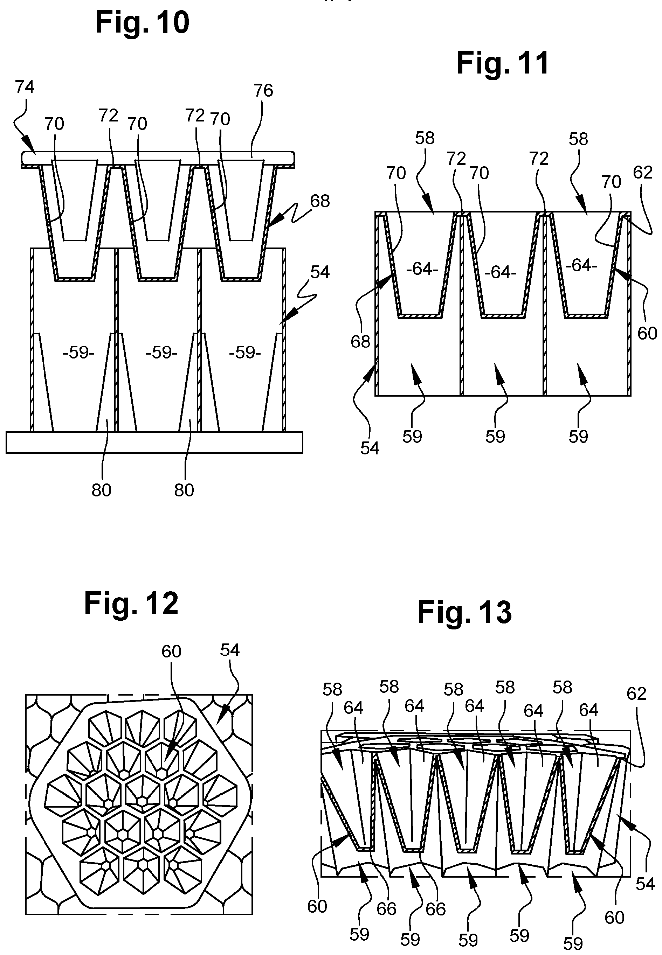

Chaque enceinte 60 peut être tronconique, comme illustré sur la figure 5, en forme de pyramide tronquée, comme illustré sur la figure 12, ou avoir toute autre forme.

Selon un autre mode de réalisation visible sur les figures 11 à 13, chaque élément acoustique 58 comprend une enceinte 60, également appelée capsule, qui présente une embouchure 62 délimitée par un bord plaqué contre la face interne 52.2 de la structure acoustiquement résistive 52 de sorte que l'enceinte 60 et la structure acoustiquement résistive 52 délimitent une cavité 64 qui communique ou non avec une alvéole 59 de la structure alvéolaire 52.

Selon une configuration, les alvéoles 59 de la structure alvéolaire 54 et les enceintes 60 des éléments acoustiques 58 sont dimensionnées de manière à ce que chaque enceinte 60 soit logée dans une alvéole 59.

Selon un agencement visible sur la figure 5, les éléments acoustiques 58 sont agencés selon plusieurs lignes et plusieurs colonnes.

Bien entendu, l'invention n'est pas limitée à cet agencement pour les éléments acoustiques 58 et/ou à ces modes de réalisation.

Selon une caractéristique de l'invention, la structure d'absorption acoustique 50 comprend au moins une peau 68 présentant plusieurs formes en creux 70, reliées entre elles par des bandes de matière 72 coplanaires, chaque forme en creux 70 étant conformée comme une enceinte 60, ladite peau 68 étant intercalée entre la structure alvéolaire 54 et la structure acoustiquement résistive 52.

Selon les cas, une structure d'absorption acoustique 50 comprend une unique peau 68 qui s'étend sur toute sa surface ou plusieurs peaux 68 intercalées entre la structure alvéolaire 54 et la structure acoustiquement résistive 52.

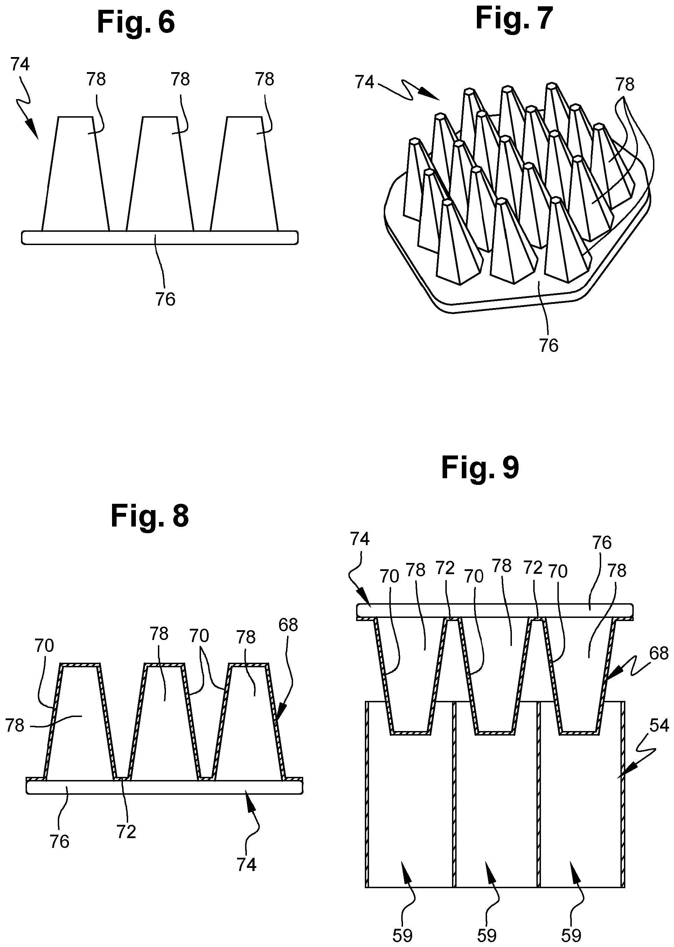

Selon un premier mode de réalisation visible sur les figures 9 à 13, les formes en creux 70 sont dimensionnées et agencées de manière à être logées chacune dans une des alvéoles 59 de la structure alvéolaire 54.

Selon un autre mode de réalisation, les formes en creux 70 ont une section supérieure à celle des alvéoles 59 de la structure alvéolaire 54. Dans ce cas, la structure alvéolaire 54 comprend des empreintes réalisées par tout moyen approprié, comme par usinage par exemple, pour loger chacune une forme en creux 70.

Selon une caractéristique de l'invention, la peau 68 présentant les formes en creux 70 est obtenue à partir d'un moule 74 présentant une base 76 sur laquelle sont positionnées des formes en saillie 78 conformées comme les cavités 64 des éléments acoustiques 58.

Selon un mode de réalisation, le moule 74 est réalisé en un matériau déformable ou flexible pour faciliter le démoulage et lui permettre de s'adapter aux imprécisions géométriques de la structure alvéolaire 54. A titre d'exemple, le moule 74 est en silicone.

La peau 68 est réalisée à partir d'une résine. Selon un mode de réalisation, la résine est une résine époxy.

Selon un autre mode de réalisation, la résine est une résine mixte polyuréthane/époxy pour obtenir une peau 68 souple apte à se déformer. Selon ce mode de réalisation, lorsque la peau 82 est solidarisée à la structure alvéolaire 54, cette dernière conserve sa capacité à se déformer.

Si la résine utilisée confère à la peau 68 une rigidité après polymérisation, la peau 68 stabilisera la structure alvéolaire 54 en forme lorsqu'elle sera solidarisée à ladite structure alvéolaire 54. Ainsi, le moule 74 peut présenter une base 76 non plane mais conformée de manière identique à la structure d'absorption acoustique 50 à réaliser.

Selon un premier mode de réalisation, la résine est sous la forme d'un film déformé ou thermoformé sur le moule 74.

Selon un deuxième mode de réalisation, la résine est à l'état liquide ou pâteux et déposée sur le moule 74 par projection, par enduction ou par trempage. Dans ce cas, la résine comprend des adjuvants pour limiter son écoulement. A titre d'exemple, la résine est thixotropique grâce à une charge.

Le procédé de réalisation d'une structure alvéolaire équipée d'une peau 68 formant une pluralité d'enceinte 60 comprend une étape de formage de la peau 68 en rapportant la résine sur le moule 74, une étape d'accostage du moule 74 et de la structure alvéolaire 54 ainsi qu'une étape de polymérisation de la résine afin d'obtenir simultanément le durcissement de la peau 68 et la jonction entre la peau 68 et la structure alvéolaire 54.

En plus de ces étapes, un procédé de réalisation d'une structure absorption acoustique comprend une étape de mise en place de la structure acoustiquement résistive 52 et de la couche réflectrice 56.

La résine utilisée pour la peau 68 peut être partiellement polymérisée à l'issue de l'étape de formage. Dans tous les cas, la résine n'est pas totalement polymérisée à l'issue de l'étape d'accostage pour obtenir la jonction entre la peau 68 et la structure alvéolaire 54 lors de l'étape de polymérisation.

Lors de l'étape d'accostage, la résine est intercalée entre le moule 74 et la structure alvéolaire 54. Le moule 74 recouvert de résine est posé sur la structure alvéolaire 54 en introduisant les formes en saillie 78 du moule 74 soit dans les alvéoles 59 soit dans les empreintes de la structure alvéolaire 54 ou la structure alvéolaire 54 est positionnée sur le moule 74 en faisant coopérer les formes en saillie 78 du moule 74 soit avec les alvéoles 59

Selon un autre mode opératoire visible sur la figure 10, préalablement à l'étape de polymérisation, la structure alvéolaire 54 est positionnée sur un contre-moule 80 qui présente des formes en saillie pénétrant dans les alvéoles 59 de la structure alvéolaire 54. Dans ce cas, lors de l'étape de polymérisation, la peau 68 est intercalée entre le moule 74 et le contre-moule 80. Cette configuration permet un calibrage de l'épaisseur de la peau 68.

Selon un mode opératoire, la peau 68 de la structure d'absorption acoustique 50 est composée de plusieurs parties juxtaposées, réalisées sur des moules 74 indépendants. Dans ce cas, les différents moules 74 sont reliés entre eux par des liaisons flottantes pour s'adapter automatiquement aux irrégularités de la structure alvéolaire 54.

Le procédé de l'invention permet d'obtenir simultanément une multitude d'enceintes 60 avec une épaisseur relativement fine par rapport à celle des enceintes des éléments acoustiques de l'art antérieur obtenus par injection, ce qui contribue à réduire la masse des éléments acoustiques 58.

Lorsque la peau 68 est souple, il est alors possible de déformer la structure alvéolaire 54 selon une courbure souhaitée et de la stabiliser selon cette courbure en collant la structure acoustiquement résistive 52 et la couche réflectrice 56.

## Revendications

1. Procédé de réalisation d'une structure d'absorption acoustique comprenant une structure acoustiquement résistive (52), une structure alvéolaire (54), une couche réflectrice (56) ainsi qu'une pluralité d'éléments acoustiques (58) comportant chacun une enceinte (60) positionnée dans la structure alvéolaire (54) et présentant une embouchure (62) délimitée par un bord plaqué contre la structure acoustiquement résistive (52) de sorte que l'enceinte (60) et la structure acoustiquement résistive (52) délimitent une cavité (64), le procédé comprenant
- une étape de formage d'une peau (68) formant les enceintes (60) des éléments acoustiques (58) en rapportant une résine sur un moule (74) présentant une base (76) sur laquelle sont positionnées des formes en saillie (78) conformées comme les cavités (64) des éléments acoustiques (58),
- une étape d'accostage du moule (74) supportant la résine et d'une structure alvéolaire (54), la résine étant intercalée entre le moule (74) et la structure alvéolaire (54),
- une étape de polymérisation de la résine afin d'obtenir simultanément un durcissement de la peau (68) ainsi que la jonction entre la peau (68) et la structure alvéolaire (54), et
- une étape de mise en place de la structure acoustiquement résistive (52) et de la couche réflectrice (56).

2. Procédé selon la revendication 1, **caractérisé en ce que** le moule (74) est réalisé en un matériau déformable ou flexible.

3. Procédé selon la revendication 1 ou 2, **caractérisé en ce que** la résine est configurée pour conférer à la peau (68) une rigidité après l'étape de polymérisation et **en ce que** le moule (74) présente une base (76) conformée comme la structure d'absorption acoustique à réaliser.

4. Procédé selon la revendication 1 ou 2, **caractérisé en ce que** la résine est configurée pour obtenir une peau (68) souple après l'étape de polymérisation.

5. Procédé selon la revendication précédente, **caractérisé en ce que** la résine est une résine mixte polyuréthane/époxy.

6. Procédé selon l'une des revendications précédentes, **caractérisé en ce que** la résine se présente sous la forme d'un film déformé ou thermoformé sur le moule (74).

7. Procédé selon l'une des revendications 1 à 5, **caractérisé en ce que** la résine est à l'état liquide ou pâteux et déposée sur le moule (74) par projection, par enduction ou par trempage.

8. Procédé selon l'une des revendications précédentes, **caractérisé en ce que** la résine est positionnée entre le moule (74) et un contre-moule (80) lors de l'étape de polymérisation.

9. Procédé selon l'une des revendications précédentes, **caractérisé en ce que** la peau (68) est composée de plusieurs parties réalisées sur des moules (74) indépendants, reliés entre eux par des liaisons flottantes.

10. Structure d'absorption acoustique obtenue à partir d'un procédé selon l'une des revendications précédentes, ladite structure d'absorption acoustique comprenant une structure acoustiquement résistive (52), une structure alvéolaire (54), une couche réflectrice (56) ainsi qu'une pluralité d'éléments acoustiques (58) comportant chacun une enceinte (60) positionnée dans la structure alvéolaire (54) et présentant une embouchure (62) délimitée par un bord plaqué contre la structure acoustiquement résistive (52) de sorte que l'enceinte (60) et la structure acoustiquement résistive (52) délimitent une cavité (64), la structure d'absorption acoustique comprenant au moins une peau (68) présentant plusieurs formes en creux (70), reliées entre elles par des bandes de matière (72) coplanaires, chaque forme en creux étant conformée comme une enceinte (60), ladite peau (68) étant intercalée entre la structure alvéolaire (54) et la structure acoustiquement résistive (52).

11. Aéronef comprenant au moins une structure d'absorption acoustique selon la revendication précédente obtenue à partir d'un procédé selon l'une des revendications 1 à 9.

## Patentansprüche

1. Verfahren zur Herstellung einer Schallabsorptionsstruktur, beinhaltend eine schalldämmende Struktur (52), eine Wabenstruktur (54), eine reflektierende Schicht (56) sowie eine Vielzahl von Schallelementen (58), die jeweils eine in der Wabenstruktur (54) positionierte Schallwand (60) umfassen und eine Öffnung (62) aufweisen, die durch einen gegen die schalldämmende Struktur (52) gedrückten Rand begrenzt wird, sodass die Schallwand (60) und die schalldämmende Struktur (52) einen Hohlraum (64) begrenzen, wobei das Verfahren Folgendes beinhaltet:
- einen Schritt des Formens einer Hülle (68), die die Schallwände (60) der Schallelemente (58) bildet, indem ein Harz auf eine Form (74) aufgetragen wird, welche eine Basis (76) aufweist, auf der vorspringende Formen (78), die wie die Hohlräume (64) der Schallelemente (58) ausgebildet sind, positioniert sind,
- einen Schritt des Anlegens der Form (74), die das Harz trägt, an eine Wabenstruktur (54), wobei das Harz zwischen die Form (74) und die Wabenstruktur (54) eingefügt wird,
- einen Schritt der Polymerisation des Harzes, um gleichzeitig eine Aushärtung der Hülle (68) sowie die Verbindung zwischen der Hülle (68) und der Wabenstruktur (54) zu erhalten, und
- einen Schritt des Anordnens der schalldämmenden Struktur (52) und der reflektierenden Schicht (56).

2. Verfahren nach Anspruch 1, **dadurch gekennzeichnet, dass** die Form (74) aus einem verformbaren oder flexiblen Material hergestellt ist.

3. Verfahren nach Anspruch 1 oder 2, **dadurch gekennzeichnet, dass** das Harz dazu konfiguriert ist, der Hülle (68) nach dem Schritt der Polymerisation eine Steifigkeit zu verleihen, und dass die Form (74) eine Basis (76) aufweist, die wie die herzustellende Schallabsorptionsstruktur ausgebildet ist.

4. Verfahren nach Anspruch 1 oder 2, **dadurch gekennzeichnet, dass** das Harz dazu konfiguriert ist, nach dem Schritt der Polymerisation eine elastische Hülle (68) zu erhalten.

5. Verfahren nach dem vorhergehenden Anspruch, **dadurch gekennzeichnet, dass** das Harz ein Polyurethan-Epoxid-Mischharz ist.

6. Verfahren nach einem der vorhergehenden Ansprüche, **dadurch gekennzeichnet, dass** das Harz auf der Form (74) in Form eines verformten oder thermogeformten Films vorliegt.

7. Verfahren nach einem der Ansprüche 1 bis 5, **dadurch gekennzeichnet, dass** das Harz in einem flüssigen oder pastösen Zustand ist und durch Spritzen, Beschichten oder Eintauchen auf die Form (74) aufgebracht wird.

8. Verfahren nach einem der vorhergehenden Ansprüche, **dadurch gekennzeichnet, dass** das Harz während des Schritts der Polymerisation zwischen der Form (74) und einer Gegenform (80) positioniert ist.

9. Verfahren nach einem der vorhergehenden Ansprüche, **dadurch gekennzeichnet, dass** die Hülle (68) aus mehreren Teilen besteht, die auf unabhängigen Formen (74), die untereinander durch schwimmende Verbindungen verbunden sind, hergestellt werden.

10. Schallabsorptionsstruktur, die gemäß einem Verfahren nach einem der vorhergehenden Ansprüche erhalten wird, wobei die Schallabsorptionsstruktur Folgendes beinhaltet: eine schalldämmende Struktur (52), eine Wabenstruktur (54), eine reflektierende Schicht (56) sowie eine Vielzahl von Schallelementen (58), die jeweils eine in der Wabenstruktur (54) positionierte Schallwand (60) umfassen und eine Öffnung (62) aufweisen, die durch einen gegen die schalldämmende Struktur (52) gedrückten Rand begrenzt wird, sodass die Schallwand (60) und die schalldämmende Struktur (52) einen Hohlraum (64) begrenzen, wobei die Schallabsorptionsstruktur mindestens eine Hülle (68) beinhaltet, die mehrere Hohlformen (70) aufweist, die untereinander durch komplanare Materialbahnen (72) verbunden sind, wobei jede Hohlform wie eine Schallwand (60) ausgebildet ist, wobei die Hülle (68) zwischen die Wabenstruktur (54) und die schalldämmende Struktur (52) eingefügt wird.

11. Luftfahrzeug, das mindestens eine Schallabsorptionsstruktur nach dem vorhergehenden Anspruch beinhaltet, die gemäß einem Verfahren nach einem der Ansprüche 1 bis 9 erhalten wird.

## Claims

1. Method for producing an acoustic absorption structure comprising an acoustically resistive structure (52), a cellular structure (54), a reflective layer (56) and a plurality of acoustic elements (58) each comprising an enclosure (60) positioned in the cellular structure (54) and having a mouth (62) delimited by an edge pressed against the acoustically resistive structure (52) so that the enclosure (60) and the acoustically resistive structure (52) delimit a cavity (64), the method comprising:
- a step of forming of a skin (68) forming the enclosures (60) of the acoustic elements (58) by adding a resin onto a mould (74) having a base (76) on which there are positioned protruding forms (78) shaped as the cavities (64) of the acoustic elements (58) ,
- a step of docking of the mould (74) supporting the resin and of a cellular structure (54), the resin being inserted between the mould (74) and the cellular structure (54),
- a step of polymerization of the resin in order to simultaneously obtain a hardening of the skin (68) and of the join between the skin (68) and the cellular structure (54), and
- a step of positioning of the acoustically resistive structure (52) and of the reflective layer (56) .

2. Method according to Claim 1, **characterized in that** the mould (74) is produced in a formable or flexible material.

3. Method according to Claim 1 or 2, **characterized in that** the resin is configured to confer on the skin (68) a rigidity after the polymerization step, and **in that** the mould (74) has a base (76) shaped as the acoustic absorption structure to be produced.

4. Method according to Claim 1 or 2, **characterized in that** the resin is configured to obtain a supple skin (68) after the polymerization step.

5. Method according to the preceding claim, **characterized in that** the resin is a mixed polyurethane/epoxy resin.

6. Method according to one of the preceding claims, **characterized in that** the resin takes the form of a film that is deformed or thermoformed on the mould (74) .

7. Method according to one of Claims 1 to 5, **characterized in that** the resin is in the liquid or pasty state and is deposited on the mould (74) by spraying, by coating or by dipping.

8. Method according to one of the preceding claims, **characterized in that** the resin is positioned between the mould (74) and a counter-mould (80) in the polymerization step.

9. Method according to one of the preceding claims, **characterized in that** the skin (68) is composed of several parts produced on independent moulds (74), linked to one another by floating links.

10. Acoustic absorption structure obtained from a method according to one of the preceding claims, said acoustic absorption structure comprising an acoustically resistive structure (52), a cellular structure (54), a reflective layer (56) and a plurality of acoustic elements (58) each comprising an enclosure (60) positioned in the cellular structure (54) and having a mouth (62) delimited by an edge pressed against the acoustically resistive structure (52) so that the enclosure (60) and the acoustically resistive structure (52) delimit a cavity (64), the acoustic absorption structure comprising at least one skin (68) having several hollow forms (70), linked to one another by coplanar strips of material (72), each hollow form being shaped as an enclosure (60), said skin (68) being inserted between the cellular structure (54) and the acoustically resistive structure (52).

11. Aircraft comprising at least one acoustic absorption structure according to the preceding claim obtained from a method according to one of Claims 1 to 9.
